# EUROPÄISCHE PATENTSCHRIFT

(11) **EP 4 305 379 B1**
(45) Veröffentlichungstag und Bekanntmachung des Hinweises auf die Patenterteilung: **19.06.2024**
(21) Anmeldenummer: 22707088.5
(22) Anmeldetag: 18.02.2022
(51) Int. Cl.: G01B 11/24, G01B 11/245, G01B 11/27

(54) **VERFAHREN UND VORRICHTUNG ZUR OPTISCHEN VERMESSUNG EINES GEWINDES**
METHOD AND DEVICE FOR OPTICALLY MEASURING A THREAD
PROCÉDÉ ET DISPOSITIF DE MESURE OPTIQUE D'UN FILETAGE

(30) Priorität: 08.03.2021 DE 102021202213
(43) Veröffentlichungstag der Anmeldung: 17.01.2024
(73) Patentinhaber: SMS Group GmbH, 40237 Düsseldorf (DE)
(72) Erfinder: HÖFER, Michael, 41372 Niederkrüchten (DE); D'HONE, Frank, 51145 Köln (DE); CHRISTIAN, Holländer, 41372 Niederkrüchten (DE)
(74) Vertreter: Kross, Ulrich
(86) Internationale Anmeldenummer: PCT/EP2022/054059
(87) Internationale Veröffentlichungsnummer: WO 2022/189122

(56) Entgegenhaltungen:
- EP-B1- 3 465 079
- WO-A1-2019/090371
- JP-A- S63 191 007
- JP-A- 2010 038 554
- JP-A- 2016 075 502

## Beschreibung

Die Erfindung betrifft ein Verfahren zur optischen Vermessung eines Gewindes an wenigstens einem Ende eines Metallrohres mittels wenigstens eines an einem Manipulator befestigten und bezüglich des Metallrohres frei positionierbaren Messkopfs.

Die Erfindung betrifft weiterhin eine Vorrichtung zur optischen Vermessung eines Gewindes, insbesondere zur Durchführung des Verfahrens.

An die Gewinde von Rohren, die für den Transport von unter Druck stehenden Fluiden dienen, wie beispielsweise Erdgas oder Erdöl, und die druckfest gas- und flüssigkeitsdicht miteinander verschraubt werden, sind hohe Anforderungen an die Dichtigkeit zu stellen. Bei solchen OCTG-Rohren (OCTG= Oil Country Tubular Goods) als Futterrohre oder Steigrohre für Erdöl- oder Erdgas Explorationsbohrungen oder Erdgas oder Erdöl Förderleitungen finden üblicherweise konische Gewinde mit hinterschnittenen Gewindeflanken Anwendungen. An die Gewinde schließt sich in der Regel stirnseitig des Rohres eine Dichtlippe an. Sowohl das Gewinde als auch die Dichtlippe müssen höchsten Präzisionsanforderungen genügen. Im Stand der Technik ist es grundsätzlich bekannt, die Gewinde zur Qualitätskontrolle der Rohre optisch zu vermessen.

Ein Verfahren sowie eine Vorrichtung zur optischen Vermessung des Außengewinde-Profils von Rohren ist beispielsweise aus der WO 2019/090371 A1 bekannt. Die Vorrichtung umfasst eine Auflage für das zu vermessende Rohr und eine optische Vermessungseinheit mit wenigstens einer Messvorrichtung, die eine Lichtquelle und eine im Strahlengang der Lichtquelle angeordnete Kamera zur Aufnahme eines Schattenbildes des Außengewinde-Profils umfasst, wobei die optische Vermessungseinheit starr auf einem Tragelement angeordnet ist, das um drei Raumachsen verschwenkbar gehalten ist, wobei weiterhin die optische Vermessungseinheit wenigstens zwei Messvorrichtungen aufweist, deren Strahlengänge einander kreuzen. Das Verfahren umfasst das Anordnen der zu vermessenden Rohre auf einer Auflage, sodass die Raumachse quer zu einer Messebene der Vermessungseinheit verläuft und das Außengewinde im Strahlengang zwischen den Lichtquellen und den zugeordneten Kameras angeordnet ist, das Ausrichten der Vermessungseinheit derart, dass die Messebene einen rechten Winkel mit der Raumachse einschließt, das Aufnehmen von Schattenbildern des Außengewindes mittels der Kamera wenigstens einer Messvorrichtung sowie das Auswerten der Schattenbilder.

Eine andere Vorrichtung zur Messung eines Gewindes ist beispielsweise aus der EP 3 465 079 B1 bekannt. Die Vorrichtung umfasst einen Halter zur lösbaren Halterung eines Rohres, wobei das Gewinde an einem Ende des Rohres ausgeformt ist, eine erste optische Messstrecke mit einem ersten optischen Sensor, wobei die erste optische Messstrecke an einem Manipulator der Vorrichtung angebracht ist, der eingerichtet ist, die erste Messstrecke relativ zu dem Rohr zu bewegen, und wobei die erste optische Messstrecke um eine erste Stellachse relativ zu einer Gewindeachse des Gewindes einstellbar ist, wobei an den Manipulator eine zweite optische Messstrecke der Vorrichtung mit einem zweiten optischen Sensor angeordnet ist, wobei die optischen Messstrecken insgesamt einen Messkanal zur gleichzeitigen Vermessung von gegenüberliegenden Seiten des Gewindes ausbilden. Die Vorrichtung zeichnet sich insbesondere dadurch aus, dass der Messkanal mittels des Manipulators um zumindest eine zweite Stellachse relativ zu der Gewindeachse kippbar ist, sodass der Messkanal innerhalb eines Raumwinkelintervalls frei ausrichtbar ist.

Aus der DE 10 2007 017 747 A1 sind ein Verfahren und eine Vorrichtung zur optischen Vermessung eines Außengewinde-Profils an einem Rohrende bekannt, bei dem die Gewinde zuvor in einer Fertigungslinie getaktet erzeugt und vor der Weiterverarbeitung in Linie vom Anfang bis zum Ende des Gewindes kontinuierlich vermessen werden. Das Profil des zuvor erzeugten Gewindes wird über eine aus Rotation und Translation bestehende Relativbewegung zwischen Rohr und mindestens einer in Gegenlicht angeordneten aus Beleuchtung und Kamera bestehenden optischen Vermessungseinheit tangential zum Rohrquerschnitt beleuchtet bzw. abgetastet.

Weiterer Stand der Technik ist aus der EP 2 259 015 B1 bekannt, die eine Kombination aus taktiler Messung und optische Vermessung von Rohrgewinden beschreibt.

Schließlich ist ein Verfahren zum Reinigen und anschließendem Messen einer Flankenfläche eines Gewindes aus der EP 2 799 809 B1 bekannt.

Bei der Vermessung von Gewinden wird üblicherweise das zu vermessende Metallrohr in eine Messlage verbracht, in der die Position des Gewindes im Raum nicht exakt definiert ist. Das ergibt sich auch dadurch, dass das zu vermessende Rohr Toleranzen bezüglich der Geradheit aufweist oder dass das Rohrende bedingt durch die Gewichtskraft herunterhängt, wenn das Rohr nicht über die gesamte Länge durch ein Auflager gestützt ist. Dadurch wird die Genauigkeit und Reproduzierbarkeit der Messung beeinträchtigt.

Der Erfindung liegt daher die Aufgabe zugrunde ein Verfahren und eine Vorrichtung zur optischen Gewindevermessung bereitzustellen, die hinsichtlich der Genauigkeit und Reproduzierbarkeit der Messergebnisse verbessert sind. Weiterhin sollen das Verfahren und die Vorrichtung gemäß der Erfindung einfach und exakt an die Vermessung verschiedener Gewinde an Metallrohren mit verschiedenen Durchmessern anpassbar sein.

Die Aufgabe wird gelöst durch ein Verfahren mit den Merkmalen des Anspruchs 1. Die Aufgabe wird weiterhin gelöst durch eine Vorrichtung mit den Merkmalen des Anspruchs 12. Vorteilhafte Ausgestaltungen des Verfahrens und der Vorrichtung gemäß der Erfindung ergeben sich aus den abhängigen Ansprüchen.

Nach einem ersten Gesichtspunkt der Erfindung wird ein Verfahren vorgeschlagen, bei dem der Messkopf bezüglich des Metallrohres frei positionierbar ist und der Messkopf wenigstens eine optische Messstrecke sowie wenigstens einen Lagedetektor aufweist, wobei das Verfahren wenigstens folgende Verfahrensschritte umfasst:
A) Bereitstellen des Metallrohres in einer Messlage,
B) Bestimmen der Raumlage einer Längsachse des Metallrohres mittels des wenigstens einen Lagedetektors vor und/ oder während einer Annäherung des Messkopfs an das Metallrohr,
C) Ausrichten des Messkopfs parallel zu der Längsachse des Metallrohres vor und/ oder während einer Positionierung des Messkopfs in einer Messstellung und
D) Durchführen der optischen Gewinde-Vermessung.

Die vorstehend aufgezählten Verfahrensmerkmale A) bis D) werden vorzugsweise in der Reihenfolge ihrer Aufzählung durchgeführt, wobei die Reihenfolge der Verfahrensschritte B) und C) austauschbar ist.

Erfindungsgemäß ist der wenigstens eine Lagedetektor so an den Messkopf angeordnet, dass dieser bei einer Annäherung des Messkopfs an das zu vermessende Gewinde bzw. an das zu vermessende Metallrohr bezogen auf den von dem Messkopf zurückgelegten Verstellweg in Richtung auf das zu vermessende Metallrohr an einem führenden Ende des Messkopfs angeordnet ist. Auf diese Art und Weise kann der Messkopf noch während der Annäherung an das Gewinde parallel zu der Längsachse des Metallrohres ausgerichtet werden, beispielsweise durch entsprechende Steuerung des Manipulators, an welchem der Messkopf befestigt ist.

Bei einer bevorzugten Variante des Verfahrens gemäß der Erfindung ist ein weiterer Verfahrensschritt vorgesehen, der eine Feinausrichtung des Messkopfs und/oder der Messstrecke des Messkopfs in der Messstellung in einem bestimmten und gegebenen Winkel und/oder in einer bestimmten axialen Position bezüglich der Längsachse des Metallrohres umfasst.

Als Lagedetektor ist ein erster Linienlaser vorgesehen, der vorzugsweise in einem rechten Winkel zu einem Soll - Verlauf der Längsachse des Metallrohres bzw. zu einer vorgesehenen Linearverstellung des Messkopfs ausgerichtet ist.

Bei dem Verfahren gemäß der Erfindung ist vorgesehen, dass die Bestimmung der Raumlage der Längsachse des Metallrohres und/oder die Feinausrichtung des Messkopfs und/oder der wenigstens einen optischen Messstrecke unter Verwendung wenigstens eines zweiten Linienlasers an dem Messkopf durchgeführt wird, der parallel zu einem Soll-Verlauf der Längsachse des Metallrohres ausgerichtet ist.

Der Messkopf kann grundsätzlich auch einen dritten Linienlaser oder Lichtschnittsensor umfassen, der zur Vermessung der Gewindeflanken bzw. der Flankenwinkel des Gewindes vorgesehen ist.

Weiterhin kann vorgesehen sein, dass der Durchmesser des Metallrohres beispielsweise während der Positionierung des Messkopfs in die Messstellung gemessen und/oder berechnet wird. Der Durchmesser des Metallrohres kann unmittelbar, beispielsweise mittels der optischen Messstrecken des Messkopfs ermittelt werden.

Bei einer weiterhin vorteilhaften Variante des Verfahrens gemäß der Erfindung ist vorgesehen, dass die Rundheit des Metallrohres während einer Rotation des Messkopfs über einen vorgegebenen Soll-Verlauf der Längsachse des Metallrohres ermittelt wird. Bedingt durch den Gewindeschneidvorgang, beispielsweise in einem Bearbeitungszentrum, kann das zu bearbeitende Metallrohr nach dem Bearbeitungsvorgang unrund sein oder eine teilweise ovale Mantelkontur aufweisen. Diese Unrundheit des Metallrohres kann erfindungsgemäß während einer Rotation des Messkopfs über einen bestimmten Winkel um die Längsachse des Metallrohres ermittelt werden, beispielsweise entweder mithilfe wenigstens eines Linienlasers und/oder mithilfe wenigstens einer optischen Messstrecke.

Bei einer Variante des Verfahrens gemäß der Erfindung ist vorgesehen, dass während einer Rotation des Messkopfs von wenigstens 180° um den Soll-Verlauf der Längsachse des Metallrohres mittels wenigstens einer, vorzugsweise mittels beider optischen Messstrecken eine Abweichung einer Ist-Gewindetiefe von einer Soll-Gewindetiefe über den Umfang des Metallrohres gemessen wird. Bei Rotation des Messkopfs um etwa 180° um den Sollverlauf der Längsachse des Metallrohres lässt sich mithilfe zweier gegenüberliegend angeordneter optischer Messstrecken insgesamt ein 360° Scan des Gewindes erzeugen.

Aus der Abweichung der Gewindetiefe über den Umfang des Metallrohres kann auch ein Winkelversatz des Ist-Verlaufs der Längsachse des Metallrohres von dem Soll-Verlauf der Längsachse des Metallrohres berechnet werden.

Der Messkopf und/oder die Messstrecke können zur Feinausrichtung des Messkopfs und/oder der Messstrecke relativ zu einem Träger verstellbar sein, der an einem freien Ende des Manipulators befestigt sein kann. Vorzugsweise erfolgt die Positionierung des Messkopfs in die Messstellung zunächst durch eine entsprechende Steuerung des Manipulators, der beispielsweise als Industrieroboter mit einem in mehreren Freiheitsgraden bewegbare Gelenkarm-Mechanismus ausgebildet ist. Die Feinausrichtung des Messkopfs bzw. der optischen Messstrecke erfolgt vorzugsweise über eine Verstellung des Messkopfs relativ zu dem Träger, wobei der Messkopf bezüglich des Trägers vorzugsweise sowohl linear verstellbar ist als auch schwenkbar ist. Der Messkopf ist vorzugsweise um eine Achse schwenkbar, die sich etwa senkrecht zu dem Soll-Verlauf der Längsachse des Metallrohres erstreckt.

Bei einer besonders vorteilhaften Variante des Verfahrens gemäß der Erfindung ist vorgesehen, dass der Messkopf zwei sich vorzugsweise etwa parallel und in einem Abstand zueinander erstreckende Messstrecken aufweist, deren Abstand bezüglich der Längsachse des Metallrohres einstellbar ist, wobei der Abstand vorzugsweise automatisch in Abhängigkeit des ermittelten und/oder errechneten Durchmessers des Metallrohres eingestellt wird. Auf diese Art und Weise lässt sich besonders einfach eine Kalibrierung der Vorrichtung gemäß der Erfindung auf verschiedene Rohrdurchmesser bewerkstelligen. Die Kalibrierung kann beispielsweise anhand eines in einer Messstation angeordneten Prüflings vorgenommen werden.

Vorzugsweise umfasst ein weiterer Verfahrensschritt eine manuelle und/oder automatische Verstellung wenigstens einer optischen Messstrecke um eine Achse senkrecht zum Soll-Verlauf der Längsachse des Metallrohres zwecks Anpassung des Messkopfs an den angegebenen Steigungswinkel des Gewindes.

Weiterhin ist vorzugsweise eine Kollisionserkennung bezüglich Durchmesser und Lage des Metallrohres bei der Positionierung des Messkopfs in die Messstellung vorgesehen, die eine weitere Bewegung des Messkopfs und/oder des Manipulators blockiert, wenn eine mögliche Kollision des Messkopfs mit dem Metallrohr detektiert wird. Dadurch wird verhindert, dass die empfindliche Messelektronik durch stoßbedingte Kräfte beeinträchtigt wird.

Schließlich ist bei einer erfindungsgemäßen Variante des Verfahrens eine vorzugsweise automatische Erkennung der Verschmutzung wenigstens einer optischen Messstrecke vorgesehen. In Abhängigkeit eines detektierten Verschmutzungsgrades kann entweder ein Reinigungsvorgang veranlasst werden oder es ist eine Funktionsunterbrechung des Messvorgangs vorgesehen. Bei zunehmendem Verschmutzungsgrad von beispielsweise Glasabdeckungen der Sensoren oder der Lichtquellen kann von dem jeweiligen Sensor der Grad der Verschleierung in Form einer sogenannten Graustufenerkennung ermittelt werden. Bei dem Verfahren ist vorgesehen, die Glasabdeckungen regelmäßig automatisch zu reinigen, beispielsweise pneumatisch. Je nach Verschmutzungsgrad kann ein zusätzlicher Reinigungsvorgang eingeleitet werden. Ab einem vorgegebenen Verschmutzungsgrad kann eine Messung nicht mehr zuverlässig durchgeführt werden. In diesem Fall ist es sinnvoll, den Messvorgang abzubrechen. Optische Sensoren der Messstrecken können beispielsweise als CCD oder als CMOS Sensor ausgeführt sein.

Ein weiterer Gesichtspunkt der Erfindung betrifft eine Vorrichtung zur optischen Vermessung eines Gewindes an wenigstens einem Ende eines Metallrohres, insbesondere eine Vorrichtung zur Durchführung des vorstehend beschriebenen Verfahrens. Die Vorrichtung kann wenigstens einen an einem Manipulator geführten bezüglich des Metallrohres frei positionierbaren Messkopf umfassen, der wenigstens eine optische Messstrecke zur Messung des Gewindes sowie wenigstens einen Lagedetektor aufweist, wobei der Messkopf relativ zu einem an dem Manipulator befestigten Träger linear verstellbar und/oder um eine Achse schwenkbar befestigt ist und die wenigstens eine optische Messstrecke sich etwa senkrecht zu dem linearen Verstellweg des Messkopfs erstreckt, wobei die Vorrichtung weiterhin Mittel zur Justierung und/oder Kalibrierung des Messkopfs und/oder der Messstrecke des Messkopfs in einer Messstellung umfasst.

Als Mittel zur Justierung und/oder Kalibrierung des Messkopfs können beispielsweise wenigstens ein Linearantrieb und/oder wenigstens ein Drehantrieb vorgesehen sein, die von einer Steuerung entsprechend ansteuerbar sein können.

Zweckmäßigerweise ist als Manipulator eine Industrieroboter mit einem mehrere Freiheitsgrade aufweisen Gelenkarm vorgesehen.

Erfindungsgemäß ist als Lagedetektor wenigstens ein erster Linienlaser vorgesehen , der sich in etwa im rechten Winkel zu dem linearen Verstellweg des Messkopfs erstreckt, und als Lagedetektor zusätzlich ein zweiter Linienlaser vorgesehen, der sich etwa parallel zu dem linearen Verstellweg des Messkopfs erstreckt.

Vorzugsweise ist wenigstens einen Kollisionsdetektor vorgesehen, der eine Verstellung des Messkopfs und/oder Bewegung des Manipulators blockiert, wenn der Messkopf oder Teile des Messkopfs mit dem Metallrohr zu kollidieren drohen. Wenigstens einer der Linienlaser des Lagedetektors kann gleichzeitig auch die Funktionalität als Kollisionsdetektor erfüllen.

Zweckmäßigerweise umfasst der Messkopf wenigstens eine erste und eine zweite optische Messstrecke, die sich jeweils etwa senkrecht zu dem linearen Verstellweg des Messkopfs erstrecken. Der Messkopf kann beispielsweise wenigstens zwei mit Abstand zueinander angeordnete und zueinander verstellbare Schenkel aufweisen, in welchen jeweils wenigstens einen optischen Sensor und wenigstens eine im Abstand dazu angeordnete Lichtquelle vorgesehen ist, die jeweils eine optische Messstrecke bilden. Der optische Sensor einer Messstrecke kann beispielsweise als CMOS oder CCD Sensor ausgebildet sein und eine telezentrische Optik aufweisen.

Der Strahlengang zwischen dem optischen Sensor und der Lichtquelle muss sich nicht notwendigerweise gradlinig erstrecken, vielmehr kann dieser auch mittels wenigstens eines Spiegels abgelenkt sein. Dadurch kann eine verhältnismäßig kompakte Bauweise des Messkopfs realisiert werden. Insbesondere kann dadurch der Abstand der jeweiligen Messstrecke zur Längsachse des Rohres und damit der Rotationsradius um die Längsachse des Metallrohres verkleinert werden.

Vorzugsweise ist wenigstens eine der optischen Messstrecken bzw. der Schenkel des Messkopfs relativ zu der jeweils anderen Messstrecke quer zu dem linearen Verstellweg des Messkopfs schwenkbar. Auf diese Art und Weise lässt sich eine vorzugsweise automatische Einstellung und/oder Anpassung des Messkopfs bzw. der Lage der Messstrecken an verschiedene Gewindesteigungswinkel erzielen.

Ein bevorzugtes Ausführungsbeispiel des Verfahrens und der Vorrichtung gemäß der Erfindung wird nachstehend anhand der beigefügten Zeichnungen erläutert.

Es zeigen:
- Figur 1: eine perspektivische Darstellung des Messkopfs gemäß der Erfindung bei der Gewindevermessung,
- Figur 2: eine schematische Darstellung als Seitenansicht mit den an dem Messkopf vorgesehenen Laser zur Lagedetektion,
- Figur 3a: eine Darstellung des optischen Messprinzips gemäß der Erfindung als Ansicht in Richtung der Längsachse des Metallrohres,
- Figur 3b: eine Seitenansicht des optischen Messprinzips mit einem zusätzlichen Lichtschnittsensor zur Vermessung hinterschnittener Gewindeflanken und
- Figur 3c: eine schematische Darstellung des Messprinzips bei der Vermessung von hinterschnittenen Gewindeflanken.

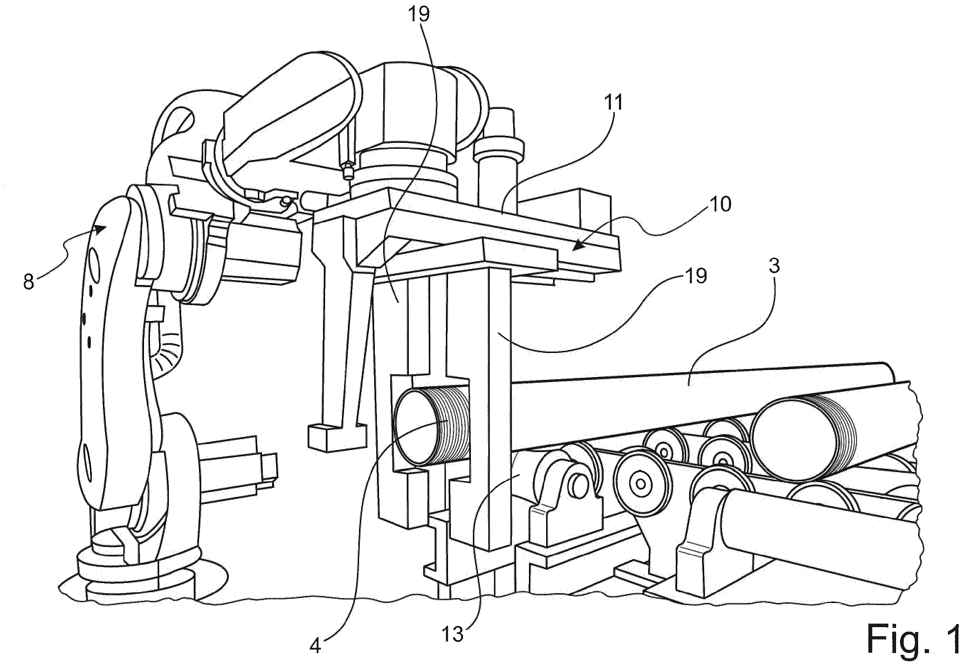

Eine Vorrichtung zur optischen Vermessung eines Gewindes gemäß der Erfindung ist in Figur 1 schematisch dargestellt. Diese umfasst als Manipulator einen Roboter 8, mit einem dreh- und schwenkbaren Roboterarm 9 mit vorzugsweise fünf Freiheitsgraden, an dessen freiem Ende ein Messkopf 10 angeordnet ist. Der Messkopf 10 umfasst einen Träger 11 mit an diesem vorgesehenen optischen Messmitteln zur optischen Vermessung eines an einem Metallrohr 3 vorgesehenen Außengewindes 4. Das Außengewinde 4 des Metallrohres 3 wurde zuvor in einer nicht dargestellten Werkzeugmaschine, beispielsweise in Form einer CNC Fräsmaschine oder eines Bearbeitungszentrums geschnitten. Das Metallrohr 3 wurde anschließend, wie in Figur 1 dargestellt, in einer definierten Messlage festgelegt. Die Messlage kann beispielsweise, wie dies in Figur 1 schematisch dargestellt ist, durch eine mittig eingeschnürte Positionsrolle (Diabolo Rolle) 13 auf einem Rollgang 12 definiert werden, wobei die Einschnürung der Positionsrolle 13 die Lage des Metallrohres 3 festlegt. Alternativ kann ein seitlicher Anschlag zur Lagefixierung des zu vermessenden Metallrohres 3 vorgesehen sein. In der Messlage des Metallrohres 3 wird der Träger 11 des Messkopfs 10, gegebenenfalls nach einer Durchmesserkalibrierung des Metallrohres 3, in eine Messtellung verfahren, in der der Messkopf 10 relativ zu dem Metallrohr ausgerichtet wird.

Die Durchmesserkalibrierung des Messkopfs 10 dient dazu, die Messmittel des Messkopfs 10 relativ zu dem Träger 11 so zu positionieren, dass das Metallrohr 3 zwischen den Messmitteln angeordnet wird, sodass der Messkopf 10 bei einer Vorausrichtung bzw. bei einer nicht mit dem Metallrohr 3 kollidiert. Hierzu kann in einer Vermessungsstation ein Kaliber als Referenzbauteil angeordnet sein, anhand dessen der Messkopf 10 vor Durchführung des Vermessungsvorgangs kalibriert werden kann.

Zur Positionierung bzw. Vorausrichtung des Messkopfs 10 ist an dem Messkopf 10 erfindungsgemäß wenigstens ein Lagedetektor vorgesehen, der vor und/oder während einer Bewegung des Messkopfs 10 in die in Figur 1 gezeigte Messlage die Raumlage der Längsachse 2 des Metallrohres 3 bestimmt. Der tatsächliche Verlauf der Längsachse 2 des Metallrohres 3 kann von einem Soll-Verlauf der Längsachse 2 abweichen. Zur Erfassung des Ist-Verlaufs der Längsachse 2 des Metallrohres 3 umfasst der Messkopf 10 als Lagedetektor einen ersten und einen zweiten Linienlaser 6,7, mit deren Hilfe die Position des Messkopfs 10 relativ zu dem in der Messlage festgelegten Metallrohr 3 überprüft und gegebenenfalls korrigiert werden kann.

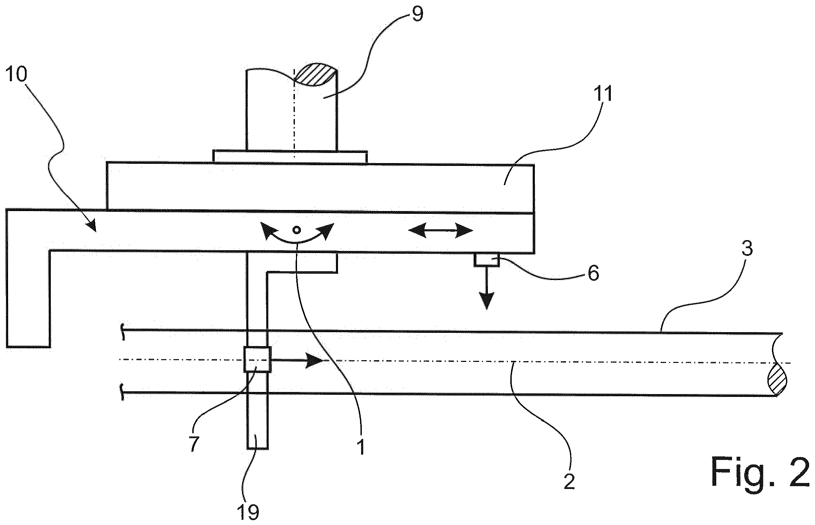

Die Anordnung des ersten und des zweiten Linienlasers 6, 7 an dem Messkopf ist schematisch in Figur 2 dargestellt. Der erste Linienlaser 6 erstreckt sich etwa in einem 90° Winkel relativ zu einem Soll-Verlauf der Längsachse 2 des Metallrohres bzw. 3 bzw. in einem Winkel von 90° bezüglich eines Linear-Verstellwegs des Messkopfs 10. Der zweite Linienlaser 7 erstreckt sich etwa parallel zu einem Soll-Verlauf der Längsachse 2 des Metallrohres 3 bzw. parallel zu einem Soll-Verlauf der Längsachse zweites Metallrohres 3 bzw. parallel zu dem Linear-Verstellweg des Messkopfs 10.Der Zweite Linienlaser 7 ist auf Höhe der Soll-Lage der Längsachse 2 des Metallrohres 3 an einem nicht schwenkbaren Schenkel 19 des Messkopfs 10 angeordnet.

Das Verfahren umfasst sowohl eine Vorausrichtung des Messkopfs 10 bzw. eine Positionierung des Messkopfs 10 in die in Figur 1 gezeigte Messlage durch eine entsprechende Ansteuerung des Roboterarms 3 als auch eine Feinausrichtung des Messkopfs 10 in der Messlage durch Verstellung des Messkopfs 10 relativ zu dem Träger 11. Die Feinausrichtung umfasst das Ausrichten wenigstens einer Messstrecke 16 bezüglich der Längsachse 2 des Metallrohres 3 durch Verschwenken des Messkopfs um eine sich etwa quer zu der Längsachse 2 des Metallrohres erstreckende Schwenkachse 1.

Wie vorstehend bereits erwähnt, ist der Messkopf 10 relativ zu dem Träger linear verfahrbar sowie vorzugsweise um wenigstens eine Achse schwenkbar. Die Linearverstellung kann beispielsweise mittels wenigstens einer angetriebenen Kugelumlaufspindel oder mittels wenigstens eines Triebstocks bewerkstelligt werden. Die Verstellung um die Schwenkachse 1 kann beispielsweise mittels eines nicht dargestellten elektrischen Drehantriebs bewerkstelligt werden.

Die Messmittel zur Vermessung des Außengewinde 4 sind jeweils in Schenkeln 19 des Messkopfs 10 angeordnet. Die Schenkel 19 des Messkopfs 10 sind in ihrem Abstand zueinander linear verstellbar. Die Schenkel 19 des Messkopfs 10 bilden eine U - förmige Umschließung des Metallrohres 3. Diese können beide unabhängig und relativ zueinander verstellbar ausgebildet sein. Bei dem beschriebenen Ausführungsbeispiel ist vorgesehen, dass ein Schenkel 19 des Messkopfs 10 ortsfest angeordnet ist, wohingegen der andere Schenkel 19 des Messkopfs 10 relativ zu dem gegenüberliegenden Schenkel 19 des Messkopfs 10 verstellbar ist. Zwecks Einstellung des Messkopfs 10 an unterschiedliche Gewindesteigungen ist vorgesehen, dass die Schenkel 19 des Messkopfs 10 um eine Achse quer zu dem linearen Verstellweg des Messkopfs 10 relativ zueinander verschwenkbar sind.

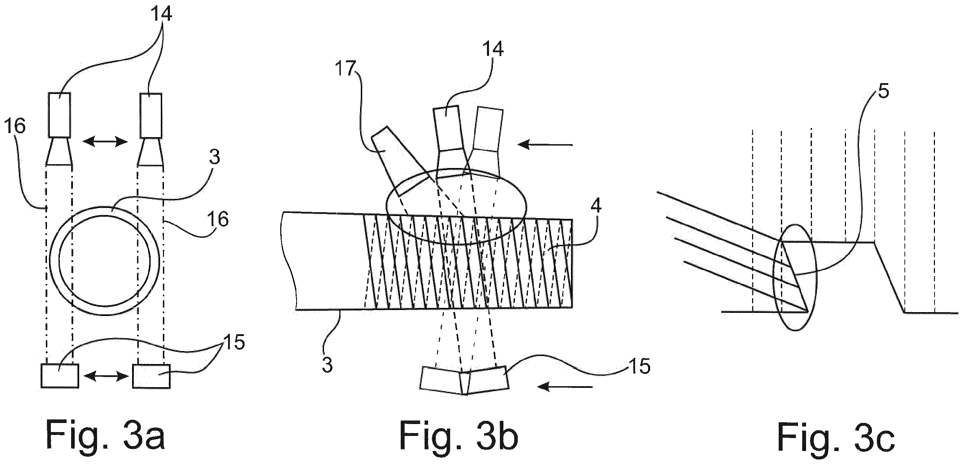

In jedem der Schenkel 19 des Messkopfs 10 sind als Messmittel eine Kamera 14 mit einer telezentrischen Optik und eine der Kamera gegenüberliegend positionierte Lichtquelle 15 vorgesehen, wie dies beispielsweise in Figur 3a dargestellt ist. Die Kamera 14 und die Lichtquelle 15 sind jeweils mit Abstand zueinander gegenüberliegend eine Messstrecke 16 bildend angeordnet, wobei die Messstrecke 16 als gerade Messstrecke 16 ausgebildet sein kann. Der Strahlengang zwischen der Kamera 14 und der Lichtquelle 15 kann alternativ über Spiegel umgelenkt sein.

Das Messprinzip wird nachstehend unter Bezugnahme auf die Figuren 3a, 3b und 3c erläutert. Jede Messstrecke 16 erfasst einen Teil des Außengewindeprofils an einer Seite des Metallrohres, wobei die von einer Lichtquelle 15 erzeugte Projektion eines Teils des Außengewindes 4 mittels jeweils einer telezentrischen Optik auf einem in einer Kamera 14 angeordneten lichtempfindlichen Sensor, beispielsweise einen CMOS oder einen CCD Sensor, auftritt. Durch die Verwendung von telezentrischen Objektiven an den Kameras 14 wird sichergestellt, dass die von dem jeweiligen Sensor erfasste Projektion unverzerrt und maßstabsgetreu aufgezeichnet werden kann. Die so erfassten Messdaten des Außengewindes 4 werden aufgezeichnet und mit dem Soll - Profil des Außengewindes 4 verglichen. Die beiden Messstrecken 16 können einen einzigen Messkanal bilden.

Bei einer Variante des Messkopfs 10 gemäß der Erfindung ist vorgesehen, dass dieser wenigstens einen Lichtschnittsensor 17 umfasst, der als Laserschnittsensor ausgebildet ist und welcher auf eine Gewindeflanke 5 des Außengewindes 4 ausgerichtet ist. Die Vermessung der Gewindeflanken 18 ist in Figur 3c veranschaulicht.

In einer nicht dargestellten Regeleinrichtung erfolgt eine Auswertung der Messdaten des Außengewindeprofils und/oder einer Dichtlippe des Außengewindes 4 sowie eine Ableitung von Steuerbefehlen für eine Steuerung einer Werkzeugmaschine insbesondere bei einer Abweichung zwischen dem Soll-Profil und dem durch Messdaten belegten Ist - Profil. Das jeweilige Soll-Profil kann beispielsweise in einer Bediener Schnittstelle (HMI) aus einem Katalog von verschiedenen Gewindetypen frei wählbar sein.

Der Messkopf 10 und die Steuerung der Werkzeugmaschine bilden einen vorzugsweise geschlossenen Regelkreis. Steuerbefehle können beispielsweise das Nachstellen der Werkzeugpositionen, die Wahl der Werkzeuge, die Drehgeschwindigkeit und dass dabei aufgebrachte Drehmoment des Spannfutters der Werkzeugmaschine sowie des Metallrohres 3, die Durchführung eines Werkzeugwechsels, die Veränderung der Taktzeit der Werkzeugmaschine etc. sein. Die Regelung kann als selbstlernende Regelung (KI) ausgeführt sein und hierzu wenigstens einen Regelalgorithmus umfassen. Die bezüglich eines Rohres ermittelten Messdaten werden erfindungsgemäß nicht nur zur Rückkopplung mit der Werkzeugmaschine und zu deren Steuerung auch zur Qualitätsdaten Sicherung und Nachverfolgung verwendet.

### Bezugszeichenliste

- 1: Schwenkachse des Messkopfs
- 2: Längsachse des Metallrohres
- 3: Metallrohr
- 4: Außengewinde
- 5: Gewindeflanken
- 6: erster Linienlaser
- 7: zweiter Linienlaser
- 8: Roboter
- 9: Roboterarm
- 10: Messkopf
- 11: Träger
- 12: Rollgang
- 13: Positionsrolle
- 14: Kamera
- 15: Lichtquelle
- 16: Messstrecke
- 17: Lichtschnittsensor
- 18: Kaliber
- 19: Schenkel des Messkopfs

## Patentansprüche

1. Verfahren zur optischen Vermessung eines Gewindes an wenigstens einem Ende eines Metallrohres (3) mittels wenigstens eines an einem Manipulator befestigten und bezüglich des Metallrohres (3) vorzugsweise frei positionierbaren Messkopfs (10), der wenigstens eine optische Messstrecke (16) zur Messung des Gewindes sowie wenigstens einen Lagedetektor aufweist, wobei das Verfahren wenigstens folgende Verfahrensschritte umfasst:
A) Bereitstellen des Metallrohres (3) in einer Messlage,
B) Bestimmen der Raumlage einer Längsachse (2) des Metallrohres (3) mittels des wenigstens einen Lagedetektors vor und/ oder während einer Positionierung des Messkopfs (10) in eine Messstellung,
C) Ausrichten des Messkopfs (10) parallel zu der Längsachse (2) des Metallrohres (3) vor und/ oder während einer Positionierung des Messkopfs (10) in die Messstellung und
D) Durchführen der optischen Gewinde-Vermessung,
**dadurch gekennzeichnet, dass** die Bestimmung der Raumlage der Längsachse (2) des Metallrohres (3) während einer Linearbewegung des Messkopfs (10) entlang eines Soll- Verlaufs der Längsachse (2) des Metallrohres (3) des Messkopfs (10) durchgeführt wird,
dass als Lagedetektor wenigstens ein erster Linienlaser (6) verwendet wird und dass die Bestimmung der Raumlage der Längsachse (2) des Metallrohres (3) und/oder eine Feinausrichtung des Messkopfs (3) und/oder
der optischen Messstrecke (16) unter Verwendung wenigsten eines zweiten Linienlasers (7) an dem Messkopf durchgeführt wird, der parallel zu einem Soll-Verlauf der Längsachse (2) des Metallrohres ausgerichtet ist.

2. Verfahren nach Anspruch 1, **gekennzeichnet durch** einen weiteren Verfahrensschritt, der eine Feinausrichtung des Messkopfs (10) und/oder der Messstrecke (16) des Messkopfs (10) in der Messstellung in einem bestimmten und gegebenen Winkel und oder in einer bestimmten axialen Position bezüglich der Längsachse (2) des Metallrohres (3) umfasst.

3. Verfahren nach einem der Ansprüche 1 oder 2, **dadurch gekennzeichnet, dass** der erste Linienlaser (6) an dem Messkopf (10) in einem rechten Winkel zu dem Soll-Verlauf der Längsachse (2) des Metallrohres (3) ausgerichtet ist.

4. Verfahren nach einem der Ansprüche 1 bis 3, **dadurch gekennzeichnet, dass** die Rundheit des Metallrohres während einer Rotation des Messkopfs über einen vorgegebenen Soll-Verlauf der Längsachse des Metallrohres ermittelt wird.

5. Verfahren nach einem der Ansprüche 1 bis 4, **dadurch gekennzeichnet, dass** während einer Rotation des Messkopfs (10) von wenigstens 180° um den Soll-Verlauf der Längsachse (2) des Metallrohres (3) mittels der optischen Messstrecken (16) eine Abweichung einer Ist-Gewindetiefe von einer Soll-Gewindetiefe über den Umfang des Metallrohres (3) gemessen wird.

6. Verfahren nach Anspruch 5, **dadurch gekennzeichnet, dass** aus der Abweichung der Gewindetiefe über den Umfang des Metallrohres (3) ein Winkelversatz des Ist-Verlaufs der Längsachse des Metallrohres von dem Soll-Verlauf der Längsachse (2) des Metallrohres (3) berechnet wird.

7. Verfahren nach einem der Ansprüche 1 bis 6, **dadurch gekennzeichnet, dass** der Messkopf (10) und/oder die Messstrecke (16) zur Feinausrichtung relativ zu einem Träger (11) verstellbar ist.

8. Verfahren nach einem der Ansprüche 1 bis 7, **dadurch gekennzeichnet, dass** der Messkopf (10) zwei sich in einem Abstand erstreckende Messstrecken (16) aufweist, deren Abstand bezüglich der Längsachse (2) des Metallrohres (3) einstellbar ist, wobei der Abstand in Abhängigkeit des ermittelten und/oder errechneten Durchmessers des Metallrohres (3) eingestellt wird.

9. Verfahren nach einem der Ansprüche 1 bis 8, **dadurch gekennzeichnet, dass** ein weiterer Verfahrensschritt eine manuelle und/oder automatische Verstellung wenigstens einer optischen Messstrecke (16) um eine Achse senkrecht zum Soll-Verlauf der Längsachse (2) des Metallrohres (3) zwecks Anpassung des Messkopfs an den angegebenen Steigungswinkel des Gewindes vorsieht.

10. Verfahren nach einem der Ansprüche 1 bis 9, **dadurch gekennzeichnet, dass** ein weiterer Verfahrensschritt eine Kollisionserkennung des Messkopfs (10) umfasst, die eine weitere Bewegung des Messkopfs (10) und/oder des Manipulators blockiert.

11. Verfahren nach einem der Ansprüche 1 bis 10, **dadurch gekennzeichnet, dass** ein weiterer Verfahrensschritt die Erkennung einer Verschmutzung wenigstens einer optischen Messstrecke (16) umfasst und dass in Abhängigkeit des detektierten Verschmutzungsgrads ein Reinigungsvorgang oder eine Funktionsunterbrechung des Messvorgangs veranlasst wird.

12. Vorrichtung zur optischen Vermessung eines Gewindes an wenigstens einem Ende eines Metallrohres (3), zur Durchführung des Verfahrens nach einem der Ansprüche 1 bis 11, umfassend wenigstens einen an einem Manipulator geführten und bezüglich des Metallrohres (3) frei positionierbaren Messkopf (10), der wenigstens eine optischen Messstrecke (16) zur Messung des Gewindes sowie wenigstens einen Lagedetektor aufweist, wobei der Messkopf relativ zu einem an dem Manipulator befestigten Träger (11) linear verstellbar sowie vorzugsweise um eine Achse schwenkbar befestigt ist und die wenigstens eine optische Messstrecke (16) sich etwa senkrecht zu dem linearen Verstellweg des Messkopfs (10) erstreckt, wobei die Vorrichtung weiterhin Mittel zur Justierung und/oder Kalibrierung des Messkopfs und/oder der Messstrecke (16) des Messkopfs (10) in einer Messstellung umfasst, **dadurch gekennzeichnet, dass** als Lagedetektor wenigstens ein erster Linienlaser (6) vorgesehen ist, der sich in etwa im rechten Winkel zu dem linearen Verstellweg des Messkopfs (10) erstreckt und dass als Lagedetektor zusätzlich ein zweiter Linienlaser (7) vorgesehen ist, der sich etwa parallel zu dem linearen Verstellweg des Messkopfs (10) erstreckt.

13. Vorrichtung nach Anspruch 12, **dadurch gekennzeichnet, dass** als Manipulator ein Industrieroboter mit einem mehrere Freiheitsgrade aufweisenden Gelenkarm (9) vorgesehen ist.

14. Vorrichtung nach einem der Ansprüche 12 oder 13 , **dadurch gekennzeichnet, dass** weiterhin wenigstens ein Kollisionsdetektor vorgesehen ist, der eine Verstellung des Messkopfs (10) und/oder Bewegung des Manipulators blockiert, wenn der Messkopf (10) oder Teile des Messkopfs (10) mit dem Metallrohr (3) kollidieren können.

15. Vorrichtung nach einem der Ansprüche 12 bis 14, **dadurch gekennzeichnet, dass** der Messkopf (10) eine erste und zweite optische Messstrecke (16) aufweist, die sich jeweils etwa senkrecht zu dem linearen Verstellweg des Messkopfs (10) erstrecken.

16. Vorrichtung nach einem der Ansprüche 12 bis 15, **dadurch gekennzeichnet, dass** der Messkopf (10) wenigstens zwei mit Abstand zueinander angeordnete und zueinander verstellbare Schenkel (19) aufweist, in welchen jeweils wenigstens ein optischer Sensor und wenigsten eine im Abstand dazu angeordnete Lichtquelle vorgesehen ist, die jeweils eine optische Messstrecke (16) bilden.

17. Vorrichtung nach einem der Ansprüche 12 bis 16, **dadurch gekennzeichnet, dass** wenigstens eine der optischen Messstrecken (16) relativ zu der jeweils anderen optischen Messstrecke (16) quer zu dem linearen Verstellweg des Messkopfs (10) schwenkbar ist.

## Claims

1. Method for optical measurement of a thread at at least one end of a metal tube (3) by means of at least one measuring head (10), which is secured to a manipulator and preferably freely positionable with respect to the metal tube (3) and which has at least one optical measuring path (16) for measuring the thread as well as at least one position detector, wherein the method comprises at least the following method steps:
A) providing the metal tube (3) in a measuring position,
B) determining the three-dimensional position of a longitudinal axis (2) of the metal tube (3) by means of the at least one position detector before and/or during positioning of the measuring head (10) in a measuring setting,
C) aligning the measuring head (10) parallel to the longitudinal axis (2) of the metal tube (3) before and/or during positioning of the measuring head (10) in the measuring setting and
D) performing the optical thread measurement,
**characterised in that** the determination of the three-dimensional position of the longitudinal axis (2) of the metal tube (3) is carried out during a linear movement of the measuring head (10) along a target course of the longitudinal axis (2) of the metal tube (3) of the measuring head (10),
at least one first line laser (6) is used as position detector and
the determination of the three-dimensional position of the longitudinal axis (2) of the metal tube (3) and/or fine orientation of the measuring head (3) and/or of the optical measuring path (16) is or are carried out with use of at least one second line laser (7) at the measuring head, which is oriented parallelly to a target course of the longitudinal axis (2) of the metal tube.

2. Method according to claim 1, **characterised by** a further method step which comprises fine orientation of the measuring head (10) and/or the measuring path (16) of the measuring head (10) in the measuring setting at a defined and given angle and/or in a defined axial position with respect to the longitudinal axis (2) of the metal tube (3).

3. Method according to one of claims 1 and 2, **characterised in that** the first line laser (6) at the measuring head (10) is oriented at a right angle to the target course of the longitudinal axis (2) of the metal tube (3).

4. Method according to any one of claims 1 to 3, **characterised in that** the roundness of the metal tube is determined during rotation of the measuring head over a predetermined target course of the longitudinal axis of the metal tube.

5. Method according to any one of claims 1 to 4, **characterised in that** during a rotation of the measuring head (10) of at least 180° about the target course of the longitudinal axis (2) of the metal tube (3) a difference of an actual thread depth from a target thread depth over the circumference of the metal tube (3) is measured by means of the optical measuring path (16).

6. Method according to claim 5, **characterised in that** an angle offset of the actual course of the longitudinal axis of the metal tube from the target course of the longitudinal axis (2) of the metal tube (3) is calculated from the difference of the thread depth over the circumference of the metal tube (3).

7. Method according to any one of claims 1 to 6, **characterised in that** the measuring head (10) and/or the measuring path (16) is or are adjustable relative to a support (11) for the fine orientation.

8. Method according to any one of claims 1 to 7, **characterised in that** the measuring head (10) has two measuring paths (16) which extend at a spacing and the spacing of which with respect to the longitudinal axis (2) of the metal tube (3) is settable, wherein the spacing is set in dependence on the determined and/or calculated diameter of the metal tube (3).

9. Method according to any one of claims 1 to 8, **characterised in that** a further method step provides a manual and/or an automatic adjustment of at least one optical measuring path (16) about an axis perpendicular to the target course of the longitudinal axis (2) of the metal tube (3) for the purpose of adaptation of the measuring head to the indicated pitch angle of the thread.

10. Method according to any one of claims 1 to 9, **characterised in that** a further method step comprises collision recognition of the measuring head (10), which blocks further movement of the measuring head (10) and/or the manipulator.

11. Method according to any one of claims 1 to 10, **characterised in that** a further method step comprises recognition of contamination of at least one optical measuring path (16) and that a cleaning process or an interruption of function of the measuring process is caused in dependence on the detected degree of contamination.

12. Device for optical measurement of a thread at at least one end of a metal tube (3), for carrying out the method according to any one of claims 1 to 11, comprising at least one measuring head (10), which is guided at a manipulator and freely positionable with respect to the metal tube (3) and which has at least one optical measuring path (16) for measuring the thread as well as at least one position detector, wherein the measuring head is secured to be linearly adjustable relative to a support (11), which is fastened to the manipulator, and preferably to be pivotable about an axis and the at least one optical measuring path (16) extends approximately perpendicularly to the linear adjustment path of the measuring head (10), wherein the device further comprises means for adjusting and/or calibrating the measuring head and/or the measuring path (16) of the measuring head (10) in a measuring setting, **characterised in that** at least one first line laser (6), which extends approximately at a right angle to the linear adjustment path of the measuring head (10), is provided as position detector and additionally a second line laser (7), which extends approximately parallelly to the linear adjustment path of the measuring head (10), is provided as position detector.

13. Device according to claim 12, **characterised in that** an industrial robot with an articulated arm (9) having a plurality of degrees of freedom is provided as manipulator.

14. Device according to one of claims 12 and 13, **characterised in that** in addition at least one collision detector is provided, which blocks adjustment of the measuring head (10) and/or movement of the manipulator if the measuring head (10) or parts of the measuring head (10) can collide with the metal tube (3).

15. Device according to any one of claims 12 to 14, **characterised in that** the measuring head (10) has a first optical measuring path and second optical measuring path (16) which extend approximately perpendicularly to the linear adjustment path of the measuring head (10).

16. Device according to any one of claims 12 to 15, **characterised in that** the measuring head (10) comprises at least two limbs (19), which are arranged at a spacing from and are adjustable relative to one another and in each of which at least one optical sensor and at least one light source arranged at a spacing therefrom are provided, which respectively define an optical measuring path (16).

17. Device according to any one of claims 12 to 16, **characterised in that** at least one of the optical measuring paths (16) is pivotable relative to the respective other optical measuring path (16) transversely with respect to the linear adjustment path of the measuring head (10).

## Revendications

1. Procédé pour la mesure optique d'un filetage à au moins une extrémité d'un tube métallique (3) au moyen d'au moins une tête de mesure (10) fixée à un manipulateur et de préférence librement positionnable par rapport au tube métallique (3), la tête de mesure comprenant au moins une ligne de mesure optique (16) pour la mesure du filetage ainsi qu'au moins un détecteur de position, le procédé comprenant au moins les étapes suivantes :
A) préparation du tube métallique (3) dans une position de mesure,
B) détermination de la position spatiale d'un axe longitudinal (2) du tube métallique (3) au moyen du ou des détecteurs de position avant et/ou pendant le positionnement de la tête de mesure (10) dans une position de mesure,
C) alignement de la tête de mesure (10) parallèlement à l'axe longitudinal (2) du tube métallique (3) avant et/ou pendant le positionnement de la tête de mesure (10) dans la position de mesure et
D) réalisation de la mesure optique du filetage,
**caractérisé en ce que** la détermination de la position spatiale de l'axe longitudinal (2) du tube métallique (3) est effectuée pendant un mouvement linéaire de la tête de mesure (10) le long d'un trajet théorique de l'axe longitudinal (2) du tube métallique (3) de la tête de mesure (10),
**en ce qu'**en tant que détecteur de position, au moins un premier laser linéaire (6) est utilisé et
**en ce que** la détermination de la position spatiale de l'axe longitudinal (2) du tube métallique (3) et/ou un alignement fin de la tête de mesure (3) et/ou de la ligne de mesure optique (16) est effectué en utilisant au moins un deuxième laser linéaire (7) sur la tête de mesure, qui est aligné parallèlement à un trajet théorique de l'axe longitudinal (2) du tube métallique.

2. Procédé selon la revendication 1, **caractérisé par** une autre étape de procédé qui comprend un alignement fin de la tête de mesure (10) et/ou de la ligne de mesure (16) de la tête de mesure (10) dans la position de mesure à un angle donné et/ou à une position axiale spécifique par rapport à l'axe longitudinal (2) du tube métallique (3).

3. Procédé selon l'une quelconque des revendications 1 ou 2, **caractérisé en ce que** le premier laser linéaire (6) sur la tête de mesure (10) est aligné à angle droit par rapport au trajet théorique de l'axe longitudinal (2) du tube métallique (3).

4. Procédé selon l'une quelconque des revendications 1 à 3, **caractérisé en ce que** la rondeur du tube métallique est déterminée pendant une rotation de la tête de mesure sur un trajet théorique prédéfini de l'axe longitudinal du tube métallique.

5. Procédé selon l'une quelconque des revendications 1 à 4, **caractérisé en ce que** pendant une rotation de la tête de mesure (10) d'au moins 180° autour du trajet théorique de l'axe longitudinal (2) du tube métallique (3) au moyen des lignes de mesure optique (16), un écart d'une profondeur de filetage réelle par rapport à une profondeur de filetage théorique sur la circonférence du tube métallique (3) est mesuré.

6. Procédé selon la revendication 5, **caractérisé en ce qu'à** partir de l'écart de la profondeur de filetage sur la circonférence du tube métallique (3), un décalage angulaire du trajet réel de l'axe longitudinal du tube métallique par rapport au trajet théorique de l'axe longitudinal (2) du tube métallique (3) est calculé.

7. Procédé selon l'une quelconque des revendications 1 à 6, **caractérisé en ce que** la tête de mesure (10) et/ou la ligne de mesure (16) sont réglables par rapport à un support (11) pour l'alignement fin.

8. Procédé selon l'une quelconque des revendications 1 à 7, **caractérisé en ce que** la tête de mesure (10) comprend deux lignes de mesure (16) s'étendant à une distance l'une de l'autre, dont la distance par rapport à l'axe longitudinal (2) du tube métallique (3) est réglable, la distance étant réglée en fonction du diamètre déterminé et/ou calculé du tube métallique (3).

9. Procédé selon l'une quelconque des revendications 1 à 8, **caractérisé en ce qu'**une autre étape de procédé prévoit un réglage manuel et/ou automatique d'au moins une ligne de mesure optique (16) autour d'un axe perpendiculaire au trajet théorique de l'axe longitudinal (2) du tube métallique (3) afin d'adapter la tête de mesure à l'angle de pente indiqué du filetage.

10. Procédé selon l'une quelconque des revendications 1 à 9, **caractérisé en ce qu'**une autre étape de procédé comprend une détection de collision de la tête de mesure (10), qui bloque un autre mouvement de la tête de mesure (10) et/ou du manipulateur.

11. Procédé selon l'une quelconque des revendications 1 à 10, **caractérisé en ce qu'**une autre étape de procédé comprend la détection d'une contamination d'au moins une ligne de mesure optique (16) et qu'en fonction du degré de contamination détecté, un processus de nettoyage ou une interruption de fonctionnement du processus de mesure est initié.

12. Dispositif pour la mesure optique d'un filetage à au moins une extrémité d'un tube métallique (3), pour la mise en oeuvre du procédé selon l'une quelconque des revendications 1 à 11, comprenant au moins une tête de mesure (10) guidée sur un manipulateur et librement positionnable par rapport au tube métallique (3), la tête de mesure comprenant au moins une ligne de mesure optique (16) pour la mesure du filetage ainsi qu'au moins un détecteur de position, la tête de mesure étant fixée de manière réglable linéairement et de préférence pivotante par rapport à un support (11) fixé au manipulateur et la ou les lignes de mesure optique (16) s'étendant approximativement perpendiculairement à la voie de réglage linéaire de la tête de mesure (10), le dispositif comprenant en outre des moyens pour l'ajustement et/ou le calibrage de la tête de mesure et/ou de la ligne de mesure (16) de la tête de mesure (10) dans une position de mesure, **caractérisé en ce qu'**en tant que détecteur de position, au moins un premier laser linéaire (6) est prévu, qui s'étend approximativement à angle droit par rapport à la voie de réglage linéaire de la tête de mesure (10) et qu'en tant que détecteur de position, un deuxième laser linéaire (7) est en outre prévu, qui s'étend approximativement parallèlement à la voie de réglage linéaire de la tête de mesure (10).

13. Dispositif selon la revendication 12, **caractérisé en ce qu'**en tant que manipulateur, un robot industriel est prévu avec un bras articulé (9) présentant plusieurs degrés de liberté.

14. Dispositif selon l'une quelconque des revendications 12 ou 13, **caractérisé en ce qu'**au moins un détecteur de collision est en outre prévu, qui bloque un réglage de la tête de mesure (10) et/ou un mouvement du manipulateur lorsque la tête de mesure (10) ou des parties de la tête de mesure (10) peuvent entrer en collision avec le tube métallique (3).

15. Dispositif selon l'une quelconque des revendications 12 à 14, **caractérisé en ce que** la tête de mesure (10) comprend une première et une deuxième ligne de mesure optique (16), qui s'étendent chacune approximativement perpendiculairement à la voie de réglage linéaire de la tête de mesure (10).

16. Dispositif selon l'une quelconque des revendications 12 à 15, **caractérisé en ce que** la tête de mesure (10) comprend au moins deux branches (19) disposées à une certaine distance l'une de l'autre et réglables l'une par rapport à l'autre, dans lesquelles sont prévus respectivement au moins un capteur optique et au moins une source lumineuse disposée à une certaine distance de celui-ci, formant chacun une ligne de mesure optique (16).

17. Dispositif selon l'une quelconque des revendications 12 à 16, **caractérisé en ce qu'**au moins une des lignes de mesure optique (16) est pivotante par rapport à l'autre ligne de mesure optique (16) transversalement à la voie de réglage linéaire de la tête de mesure (10).
